# EUROPEAN PATENT SPECIFICATION

(11) **EP 2 556 575 B1**
(45) Date of publication and mention of the grant of the patent: **18.03.2015**
(21) Application number: 11713662.2
(22) Date of filing: 01.04.2011
(51) Int. Cl.: H02J 3/01

(54) **POWER QUALITY IMPROVEMENT BY ACTIVE FILTER**
LEISTUNGSQUALITÄTSVERBESSERUNG DURCH AKTIVE FILTER
AMÉLIORATION DE QUALITÉ DE PUISSANCE PAR UN FILTRE ACTIF

(30) Priority: 06.04.2010 DK 201000287
(43) Date of publication of application: 13.02.2013
(73) Proprietor: Danfoss Drives A/S, 6300 Graasten (DK)
(72) Inventor: KALASCHNIKOW, Sergej, A-1080 Wien (AT); ASIMINOAEI, Lucian, DK-6400 Sønderborg (DK)
(74) Representative: Jennings, Nigel Robin
(86) International application number: PCT/DK2011/000023
(87) International publication number: WO 2011/124223

(56) References cited:
- ROUTIMO M ET AL: "LCL Type Supply Filter for Active Power Filter - Comparison of an Active and a Passive Method for Resonance Damping", POWER ELECTRONICS SPECIALISTS CONFERENCE, 2007. PESC 2007. IEEE, IEEE, PISCATAWAY, NJ, USA, 17 June 2007 (2007-06-17), pages 2939-2945, XP031218722, ISBN: 978-1-4244-0654-8
- SERPA L A ET AL: "A modified direct power control strategy allowing the connection of three-phase inverter to the grid through LCL filters", CONFERENCE RECORD OF THE 2005 IEEE INDUSTRY APPLICATIONS CONFERENCE FORTIETH IAS ANNUAL MEETING 2-6 OCT. 2005 KOWLOON, HONG KONG, CHINA, IEEE, CONFERENCE RECORD OF THE 2005 IEEE INDUSTRY APPLICATIONS CONFERENCE FORTIETH IAS ANNUAL MEETING (IEEE CAT., vol. 1, 2 October 2005 (2005-10-02), pages 565-571, XP010842424, DOI: 10.1109/IAS.2005.1518363 ISBN: 978-0-7803-9208-3
- SHUQUAN ZHANG ET AL: "Parallel control of shunt active power filters with capacity proportion frequency allocation", POWER ELECTRONICS AND DRIVE SYSTEMS, 2009. PEDS 2009. INTERNATIONAL CONFERENCE ON, IEEE, PISCATAWAY, NJ, USA, 2 January 2009 (2009-01-02), pages 127-131, XP031614591, ISBN: 978-1-4244-4166-2

## Description

### FIELD OF THE INVENTION

The present invention relates to an arrangement and a method for improving power quality. In particular, the present invention relates to an arrangement and a method for improving power quality by measuring a current through a capacitor of a LCL-filter and using said current information to control a PWM inverter so as to generate harmonic compensation currents.

### BACKGROUND OF THE INVENTION

The quality of electrical power being distributed on power supply networks is important for consumers being supplied from such networks. In particular, sensitive consumer electronics may be damaged if the power quality of the supplied power do not fulfil specific demands in terms of, for example, allowable harmonic loads currents, noise etc.

Large and/or medium size industrial plants may generate harmonic load currents and introduce such disturbing harmonic load currents into the power supply network. Typically, the harmonic load currents are generated by high frequency switching devices, such as for example AC motor drive units. The high frequency harmonics propagate into the power supply network as high frequency switching harmonic currents. In order to suppress such currents LCL-filters consisting of two reactors and a capacitor connected therebetween are typically applied.

However, a LCL-filter has a self-resonance frequency. If the harmonic load currents provided from the power supply network or generated by PWM control switching coincide with this self-resonance frequency, unintentional resonance scenarios may occur and as result the LCL-filter can be overloaded. Conventionally, in order to suppress this resonance phenomenon, a damping circuit is applied. In its simplest form the damping circuit consists of a damping resistor connected in series with the capacitor of the LCL-filter. However, such a damping circuit/resistor induces additional losses in the LCL-filter.

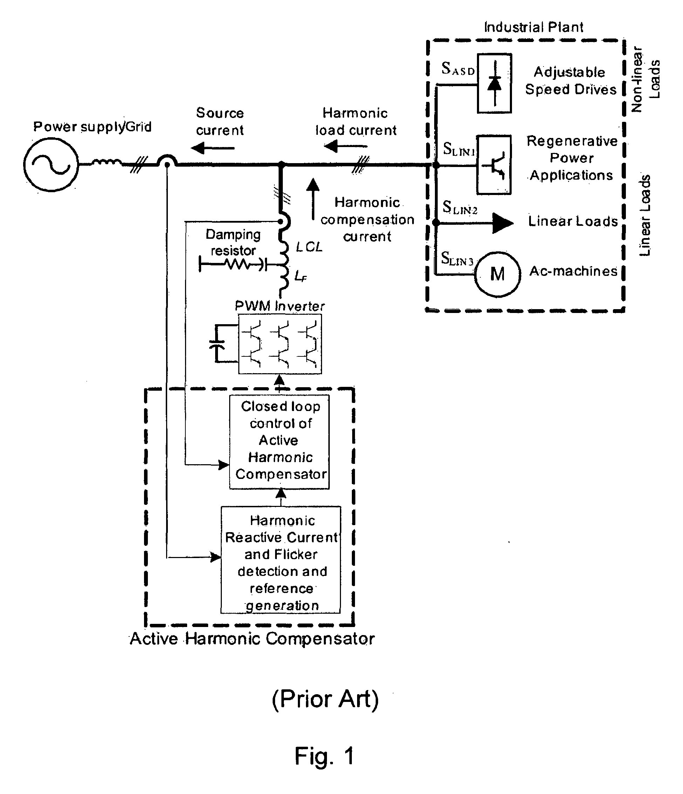

A conventional active filter approach is depicted in Fig. 1. The active filter depicted in Fig. 1 includes a LCL-filter operatively connected to a PWM inverter applying a fixed switching frequency. Moreover, the LCL-filter includes a damping circuit in the form of a damping resistor for damping resonance around the self-resonance frequency of the LCL-filter. In addition, the active filter includes an active harmonic compensation for controlling the PWM inverter in response to a measured grid current and a measured harmonic compensation current.

Whilst the use of an active filter has the advantage of improving the power quality, power losses will additionally occur within the inverter due to the switching losses in the switches which comprise the inverter.

The article "LCL Type Supply Filter for an Active Power Filter ..." by Routimo M. et. al. (Power Electronics Specialists Conference 2007 PESC 2007 pages 2939-2945) compares an active and a passive method for LCL Filter reasonance damping and assesses their suitability for the active power filter application. It also shows an active power filter according to the preamble of claim 9.

It is an object of embodiments of the present invention to provide an active power filter and an associated method for improving power quality, and maintaining electrical losses at a minimum level.

### DESCRIPTION OF THE INTENTION

The above-mentioned object is complied with by applying an active power filter, said active power filter comprising a LCL-filter for harmonic current suppression without employing a damping resistor for suppression of the LCL-filter resonance Moreover, a variable switching frequency is applied to a PWM inverter of said active power filter, said PWM inverter being controlled by at least one internally measured electrical parameter of said active power filter. The active power filter may be a single phase filter or a multiphase filter, such as a three phase filter.

So, in a first aspect the present invention relates to a method for suppressing one or more harmonic currents in a power supply network, said harmonic currents being generated by one or more loads operationally connected to said power supply network, the method comprising the steps of
- providing an active power filter comprising an electronic inverter comprising a number of controllable switches, said electronic inverter being operatively connected to an LCL-filter forming part of said active power filter, and
- providing PWM control signals to each of said controllable switches in response to a particular harmonic current or particular harmonic currents to be suppressed in the power supply network,
wherein a modulation frequency of at least one PWM control signal varies continuously in response to a value of at least one measured electrical parameter.

Typically, harmonic currents are generated by large and medium size industrial plants. These harmonic currents propagate onto the power distribution grid (power supply network) and they may, if they are not properly damped, cause damage to other electrical devices operatively connected to the same grid.

Continuously varying the frequency of the at least one PWM control signal in response to a value of at least one measured electrical parameter allows very precise tailoring of the frequency to the rate of change of the value of at least one measured electrical parameter. The switching frequency may, for example, have a short cycle length where the rate of change of the desired output is highest. A longer cycle length may be applied where the desired output changes at a lower rate. The power losses in the controllable switches, which are proportional to the frequency of the at least one PWM control signal, may therefore advantageously lowered in comparison to the losses occurring if a single switching frequency is used. The average switching rate (and so power loss) can thus be lowered without losing accuracy of waveform produced when compared with a method where a single high frequency is used as the at least one PWM control signal.

The modulation frequency of the at least one PWM control signal may vary within a time frame corresponding to a fundamental frequency of the power supply network. As the fundamental frequency of the power supply network is either 50 Hz or 60 Hz the modulation frequency may be varied within a time frame of 15-20 ms.

The at least one measured electrical parameter may be measured internally in the LCL-filter. Preferably, the measured electrical parameter comprises a measured current flowing internally in the LCL-filter. The measured current may be a current flowing through the capacitor or the LCL-filter.

The LCL-filter and the electronic inverter may be configured to suppress harmonic currents in a three phase power supply network. Thus, the LCL-filter may comprise three identical LCL-branches (one for each phase) and the electronic inverter may be implemented as a B6 coupling comprising three pairs of IGBTs (one pair for each phase).

In addition to measuring the current or currents flowing through the capacitor or capacitors the method may further comprise the step of measuring an output current from the active power filter. The output current from the active power filter is measured at a connection point before the point of common coupling (PCC), i.e. the connection point where the active filter feeds the harmonic compensation current or currents into the power supply network.

The method may further comprise the step of measuring a power supply network current or currents (in the case of for example a three phase network). A power supply network current is the current resulting from a combination of a harmonic load current (current from the network loads) and the harmonic compensation current (current from the active filter).

The modulation frequency of the at least one of the PWM control signals may vary within the range 1-10 kHz.

In a second aspect, the present invention relates to an active power filter for suppressing one or more harmonic currents being generated by one or more loads operationally connected to a power supply network, the active power filter comprising
- an electronic inverter comprising a number of controllable switches, said electronic inverter being operatively connected to an LCL-filter, and
- means for generating PWM control signals to each of said controllable switches in response to a particular harmonic current or currents to be suppressed in the power supply network,
wherein the means for generating PWM control signals is adapted to continuously vary the modulation frequency of at least one PWM control signal in response to a value of at least one measured electrical parameter.

The active power filter may be implemented as a single phase filter or a multiphase filter, such as a three phase filter. Thus, the LCL-filter and the electronic inverter may be configured to suppress harmonic currents in a three phase power supply network. In that case the LCL-filter may comprise three identical LCL-branches (one for each phase) and the electronic inverter may be implemented as a B6 coupling comprising three pairs of IGBTs (one pair for each phase).

Continuously varying the frequency of the at least one PWM control signal in response to a value of at least one measured electrical parameter allows very precise tailoring of the frequency to the rate of change of the value of at least one measured electrical parameter. The switching frequency may, for example, have a short cycle length where the rate of change of the desired output is highest. A longer cycle length may be applied where the desired output changes at a lower rate. The power losses in the controllable switches, which are proportional to the frequency of the at least one PWM control signal, may therefore advantageously lowered in comparison to the losses occurring if a single switching frequency is used. The average switching rate (and so power loss) can thus be lowered without losing accuracy of waveform produced when compared with an active power filter where a single high frequency is used as the at least one PWM control signal.

The means for generating the PWM control signals may be capable of varying the modulation frequency of the at least one PWM control signal within a time frame corresponding to a fundamental frequency of the power supply network. As the fundamental frequency of the power supply network is either 50 Hz or 60 Hz the modulation frequency may be varied within a time frame of 15-20 ms.

The active power filter may further comprise means for measuring an output current from the active power filter, means for measuring the at least one electrical parameter, and means for measuring a power supply network current. The means for measuring the at least one electrical parameter may comprise a current sensor positioned so as to measure a current flowing through a capacitor of the LCL-filter.

The modulation frequency of at least one of the PWM control signals may be within the range 1-10 kHz.

The a third aspect, the present invention relates to a power supply network wherein one or more active power filters according to the second is/are connected in parallel to one or more loads generating one or more harmonic currents.

### BRIEF DESCRIPTION OF THE DRAWINGS

The present invention will now be explained in further details with reference to the accompanying figures, wherein
Fig. 1 shows a conventional active filter arrangement including a damping resistor,
Fig. 2 shows an active power filter according to an embodiment of the present invention,
Fig. 3 shows various implementations of a LCL-filter, and
Fig. 4 illustrates various PWM scenarios.

While the invention is susceptible to various modifications and alternative forms, specific embodiments have been shown by way of examples in the drawings and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION OF THE INVENTION

In its broadest aspect the present invention is directed to a novel power active filter with minimal losses. This has been achieved by suppressing a self-resonance of a LCL-filter for harmonic current suppression without employing a damping resistance, and by applying a variable switching frequency in a PWM inverter being operatively connected to the LCL-filter.

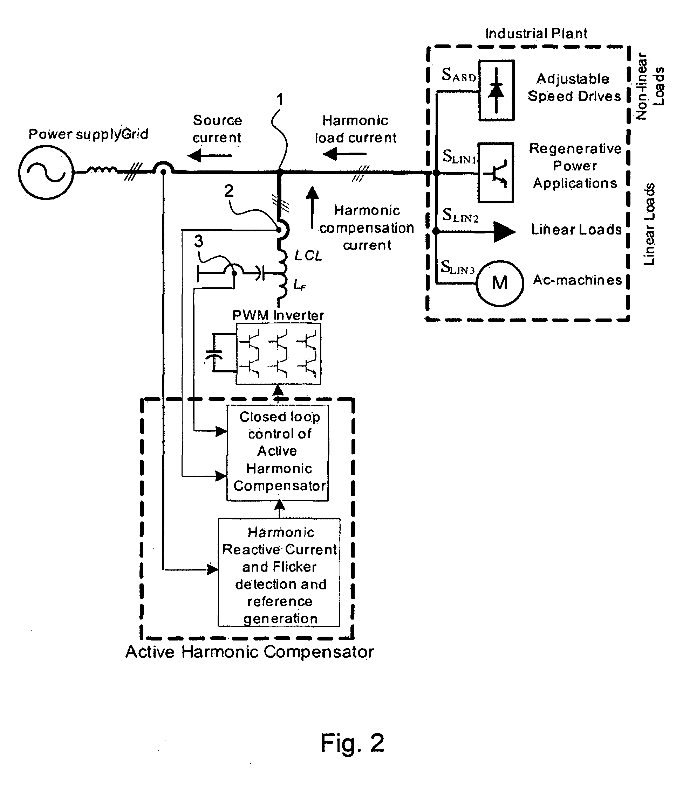

Referring now to Fig. 2 an active filter injects power into the power supply network, the injected power having relatively low frequency components. Usually, the injected harmonic compensation currents are in the frequency range 100-2000 Hz. If the generated harmonic compensation currents are properly matched to the harmonic load currents the source current at the point of common coupling 1 will be without harmonics. Ideally the source current will be sinusoidal, but in practise a small amount of harmonics will remain in the source current. However, this small amount of harmonics will be well below the amount allowed by the local grid code. The reactive currents of the nonlinear loads can be compensated at the same time as well.

The inverter of the active filter (denoted PWM Inverter in Fig. 2) operates in accordance with a so-called pulse width modulation technique (PWM technique). The frequency of the carrier wave that is employed in the PWM technique must be many times higher compared to the frequency of the output current/voltage of the PWM inverter. The frequency of the carrier wave is variable and thereby changeable during operation of the active filter.

As previously mentioned a LCL-filter consists of two reactors and a capacitor connected therebetween.

In order to implement a low-loss active power filter comprising an LCL-filter for harmonic current suppression, said LCL-filter comprises at least two reactors, a capacitor and an unavoidable internal resistance. An output current from the active power filter and a current flowing through the capacitor of the LCL-filter are measured and subsequently used to control of the PWM inverter of the active power filter.

In an embodiment of the present invention the source current and the current flowing through the capacitor of the LCL-filter are both measured respectively at points 2 and 3, in Fig. 2, and subsequently transformed into a space vector. The current error signal, i.e. the difference signal between the measured vector current and the vector reference value of this current, is transformed to form a voltage vector reference signal. The amplitude and the placement of this voltage vector reference signal are used for defining a switching signal of the PWM inverter. The frequency of the switching signal is varied so that the switching frequency of the PWM inverter depends on the current error signal.

Thus, in the active power filter according to the present invention, the current flowing through the capacitor of the LCL-filter is detected and applied as a current reference correction signal to correct the current reference. The PWM inverter of the active power filter applies this corrected new current reference signal whereby the resonance current of the LCL-filter can be damped in the same way as if a damping resistance was applied.

Continuously varying the switching frequency of the PWM inverter allows very precise tailoring of the frequency. The switching frequency may, for example, have a short cycle length where the rate of change of the desired output is highest. A longer cycle length may be applied where the desired output changes at a lower rate. The power losses in the inverter switches, which are proportional to the switching frequency, may therefore advantageously lowered in comparison to the losses occurring if a single switching frequency is used. The average switching rate (and so power loss) can thus be lowered without losing accuracy of waveform produced when compared with an active power filter where a single high frequency is used.

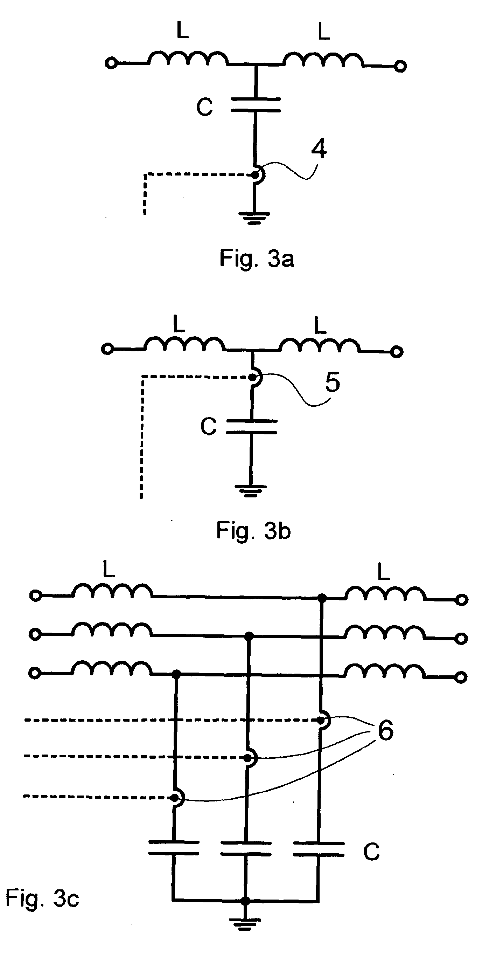

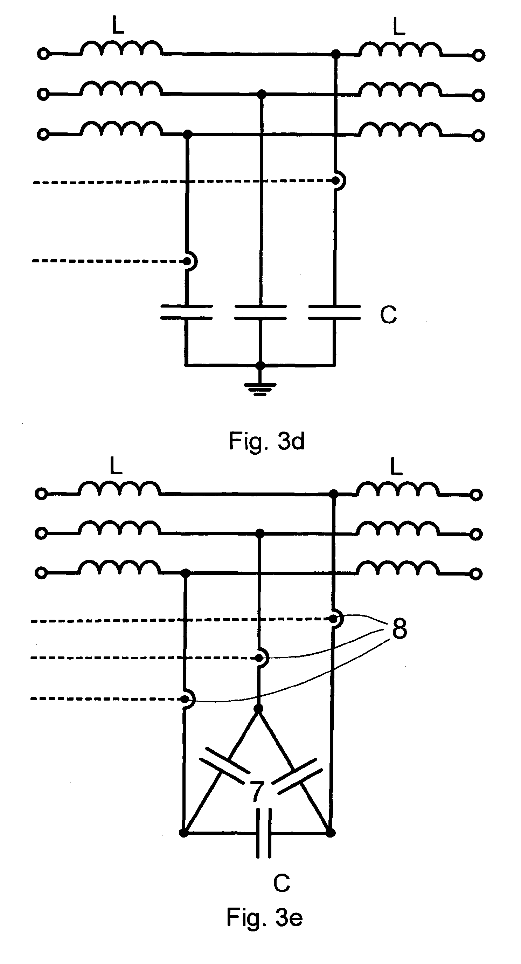

The LCL-filter of the present invention may be implemented in various ways. Referring now to Fig. 3, single phase implementations are depicted in Fig. 3a and Fig. 3b. The only difference between these two implementations is the positioning of the current sensor 4, 5 for measuring the current flowing through the capacitor of the LCL-filter.

Fig 3c, 3d and 3e all depict three phase implementations. In Fig. 3c the currents are measured at point 6 prior to reaching the capacitors of the LCL-filter. In Fig. 3d only two currents are measured, the third current being estimated from knowledge of the known values of circuit components and/or historical measurements. In Fig. 3e the three capacitors are coupled in a Δ-connection 7 while the three currents are measured at points 8 which lie between the reactors one of the three points forming the Δ-connections of the capacitors.

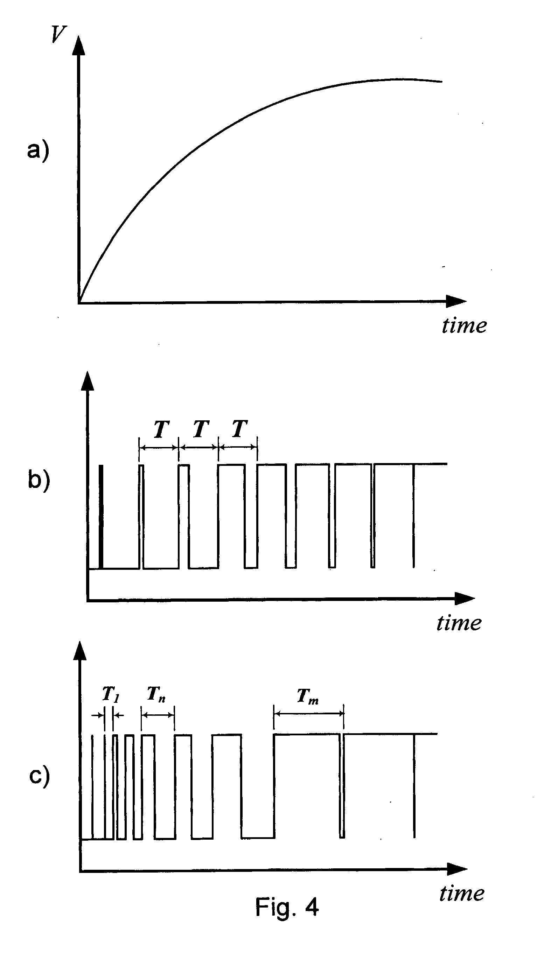

Referring now to Fig. 4a a portion of the desired voltage vs. time is depicted. Traditionally the desired voltage is generated by a traditional PWM switch pattern where the width of each pulse (duty cycle) is varied throughout the cycle of the fundamental but the PWM cycle length (T) remains unchanged - cf. Fig. 4b.

Fig. 4c depicts a signal where a variable switching frequency is used. Here the switching frequency has a short cycle length (T1) where the rate of change of the desired output is highest. A longer cycle length (Tm) is applied where the desired output does not change very much. Using this method the error between the desired and actual voltage output is similar over the whole cycle. In addition, the power loss in the switches, which is proportional to switching rate, is much lower than it would be if the cycle time of T1 was used over the whole fundamental cycle. The average switching rate (and so power loss) can thus be lowered without losing accuracy of waveform produced when compared with a method where the whole PWM signal is switched at a high switching frequency.

## Claims

1. A method for suppressing one or more harmonic currents in a power supply network, said harmonic currents being generated by one or more loads operationally connected to said power supply network, the method comprising the steps of
- providing an active power filter comprising an electronic inverter comprising a number of controllable switches, said electronic inverter being operatively connected to an LCL-filter forming part of said active power filter, and
- providing PWM control signals to each of said controllable switches in response to a particular harmonic current or particular harmonic currents to be suppressed in the power supply network,
wherein a modulation frequency of at least one PWM control signal varies continuously in response to a value of at least one measured electrical parameter.

2. A method according to claim 1, wherein the modulation frequency of the at least one PWM control signal varies within a time frame corresponding to a fundamental frequency of the power supply network.

3. A method according to claim 1 or 2, wherein the at least one measured electrical parameter is measured internally in the LCL-filter.

4. A method according to claim 3, wherein the measured electrical parameter comprises a measured current flowing internally in the LCL-filter.

5. A method according to claim 4, wherein the LCL-filter and the electronic inverter are configured to suppress harmonic currents in a three phase power supply network.

6. A method according to any of the preceding claims, further comprising the step of measuring an output current from the active power filter.

7. A method according to any of the preceding claims, further comprising the step of measuring a power supply network current.

8. A method according to any of the preceding claims, wherein the modulation frequency of the at least one of the PWM control signals is within the range 1-10 kHz.

9. An active power filter for suppressing one or more harmonic currents being generated by one or more loads operationally connected to a power supply network, the active power filter comprising
- an electronic inverter comprising a number of controllable switches, said electronic inverter being operatively connected to an LCL-filter, and
- means for generating PWM control signals to each of said controllable switches in response to a particular harmonic current or currents to be suppressed in the power supply network,
**characterized in that**: the means for generating PWM control signals is adapted to continuously vary the modulation frequency of at least one PWM control signal in response to a value of at least one measured electrical parameter.

10. An active power filter according to claim 9, wherein the means for generating the PWM control signals is capable of varying the modulation frequency of the at least one PWM control signal within a time frame corresponding to a fundamental frequency of the power supply network.

11. An active power filter according to claim 9 or 10, wherein the LCL-filter and the electronic inverter are configured to suppress harmonic currents in a three phase power supply network.

12. An active power fitter according to any of claims 9-11, further comprising means (2) for measuring an output current from the active power filter, means (3, 4, 5, 6, 8) for measuring the at feast one electrical parameter, and means for measuring a power supply network current.

13. An active power filter according to claim 12, wherein the means for measuring the at least one electrical parameter comprises a current sensor (3,4,5,6,8) positioned so as to measure a current flowing through a capacitor of the LCL-filter.

14. An active power filter according to any of claims 9-13, wherein the modulation frequency of at least one of the PWM control signals is within the range 1-10 kHz.

15. A power supply network wherein one or more active filters according to any of claims 9-14 is/are connected in parallel to one or more loads generating one or more harmonic currents.

## Patentansprüche

1. Verfahren zum Unterdrücken eines oder mehrerer Oberschwingungsströme in einem Stromversorgungsnetz, wobei die Oberschwingungsströme durch eine oder mehrere Lasten erzeugt werden, die wahlweise mit dem Stromversorgungsnetz verbunden sind, wobei das Verfahren die folgenden Schritte umfasst:
- Bereitstellen eines aktiven Leistungsfilters, das einen elektronischen Wandler umfasst, der eine Anzahl von steuerbaren Schaltern umfasst, wobei der elektronische Wandler betriebstechnisch mit einem LCL-Filter verbunden ist, das einen Teil des aktiven Leistungsfilters bildet, und
- Liefern von PWM-Steuersignalen an jeden der steuerbaren Schalter als Reaktion auf einen bestimmten Oberschwingungsstrom oder bestimmte Oberschwingungsströme, die in dem Stromversorgungsnetz zu unterdrücken sind,
wobei eine Modulationsfrequenz mindestens eines PWM-Steuersignals als Reaktion auf einen Wert mindestens eines gemessenen elektrischen Parameters kontinuierlich variiert.

2. Verfahren nach Anspruch 1, wobei die Modulationsfrequenz des mindestens einen PWM-Steuersignals innerhalb eines Zeitrahmens variiert, der einer Grundfrequenz des Stromversorgungsnetzes entspricht.

3. Verfahren nach Anspruch 1 oder 2, wobei der mindestens eine gemessene elektrische Parameter intern in dem LCL-Filter gemessen wird.

4. Verfahren nach Anspruch 3, wobei der gemessene elektrische Parameter einen gemessenen Strom umfasst, der intern in dem LCL-Filter fließt.

5. Verfahren nach Anspruch 4, wobei das LCL-Filter und der elektronische Wandler konfiguriert sind, Oberschwingungsströme in einem Dreiphasenstromversorgungsnetz zu unterdrücken.

6. Verfahren nach einem der vorhergehenden Ansprüche, das ferner den Schritt umfasst, einen Ausgangsstrom von dem aktiven Leistungsfilter zu messen.

7. Verfahren nach einem der vorhergehenden Ansprüche, das ferner den Schritt umfasst, einen Stromversorgungsnetzstrom zu messen.

8. Verfahren nach einem der vorhergehenden Ansprüche, wobei die Modulationsfrequenz des mindestens einen der PWM-Steuersignale innerhalb des Bereichs von 1-10 kHz liegt.

9. Aktives Leistungsfilter zum Unterdrücken eines oder mehrerer Oberschwingungsströme, die durch eine oder mehrere Lasten erzeugt werden, die wahlweise mit einem Stromversorgungsnetz verbunden sind, wobei das aktive Leistungsfilter Folgendes umfasst:
- einen elektronischen Wandler, der eine Anzahl von steuerbaren Schaltern umfasst, wobei der elektronische Wandler betriebstechnisch mit einem LCL-Filter verbunden ist, und
- Mittel zum Erzeugen von PWM-Steuersignalen für jeden der steuerbaren Schalter als Reaktion auf einen bestimmten Oberschwingungsstrom oder -ströme, die in dem Stromversorgungsnetz zu unterdrücken sind,
**dadurch gekennzeichnet**, das:
die Mittel zum Erzeugen der PWM-Steuersignale ausgelegt sind, die Modulationsfrequenz mindestens eines PWM-Steuersignals als Reaktion auf einen Wert des mindestens einen gemessenen elektrischen Parameters kontinuierlich zu variieren.

10. Aktives Leistungsfilter nach Anspruch 9, wobei die Mittel zum Erzeugen der PWM-Steuersignale die Modulationsfrequenz des mindestens einen PWM-Steuersignals innerhalb eines Zeitrahmens variieren können, der einer Grundfrequenz des Stromversorgungsnetzes entspricht.

11. Aktives Leistungsfilter nach Anspruch 9 oder 10, wobei das LCL-Filter und der elektronische Wandler konfiguriert sind, Oberschwingungsströme in einem Dreiphasenstromversorgungsnetz zu unterdrücken.

12. Aktives Leistungsfilter nach einem der Ansprüche 9-11, das ferner Mittel (2) zum Messen eines Ausgangsstroms von dem aktiven Leistungsfilter, Mittel (3, 4, 5, 6, 8) zum Messen des mindestens einen elektrischen Parameters und Mittel zum Messen eines Stromversorgungsnetzstromes umfasst.

13. Aktives Leistungsfilter nach Anspruch 12, wobei die Mittel zum Messen des mindestens einen elektrischen Parameters einen Stromsensor (3, 4, 5, 6, 8) umfassen, der positioniert ist, um einen Strom, der durch einen Kondensator des LCL-Filters fließt, zu messen.

14. Aktives Leistungsfilter nach einem der Ansprüche 9-13, wobei die Modulationsfrequenz mindestens eines der PWM-Steuersignale innerhalb des Bereichs von 1-10 kHz liegt.

15. Stromversorgungsnetz, wobei ein oder mehrere aktive Leistungsfilter nach einem der Ansprüche 9-14 zu einer oder mehreren Lasten, die einen oder mehrere Oberschwingungsströme erzeugen, parallel geschaltet sind.

## Revendications

1. Procédé pour supprimer un ou plusieurs courants harmoniques dans un réseau d'alimentation électrique, lesquels courants harmoniques sont générés par une ou plusieurs charges connectées fonctionnellement audit réseau d'alimentation électrique, lequel procédé comprend les étapes consistant à :
- utiliser un filtre électrique actif comprenant un onduleur électronique comprenant un certain nombre de commutateurs commandés, lequel onduleur électronique est connecté fonctionnellement à une partie formant un filtre LCL dudit filtre électrique actif ; et
- envoyer des signaux de commande MLI vers chacun des commutateurs commandés en réponse à un courant harmonique particulier ou des courants harmoniques particuliers à supprimer dans le réseau d'alimentation électrique ;
dans lequel une fréquence de modulation d'au moins un signal de commande MLI varie de manière continue en réponse à une valeur d'au moins un paramètre électrique mesuré.

2. Procédé selon la revendication 1, dans lequel la fréquence de modulation dudit au moins un signal de commande MLI varie dans une trame de temps correspondant à une fréquence fondamentale du réseau d'alimentation électrique.

3. Procédé selon les revendications 1 ou 2, dans lequel ledit au moins un paramètre électrique mesuré est mesuré de manière interne par le filtre LCL.

4. Procédé selon la revendication 3, dans lequel le paramètre électrique mesuré comprend un courant mesuré circulant en interne dans le filtre LCL.

5. Procédé selon la revendication 4, dans lequel le filtre LCL et l'onduleur électronique sont conçus pour supprimer des courants harmoniques dans un réseau d'alimentation électrique triphasé.

6. Procédé selon l'une quelconque des revendications précédentes, comprenant en outre l'étape consistant à mesurer un courant de sortie du filtre électrique actif.

7. Procédé selon l'une quelconque des revendications précédentes, comprenant en outre l'étape consistant à mesurer un courant du réseau d'alimentation électrique.

8. Procédé selon l'une quelconque des revendications précédentes, dans lequel la fréquence de modulation dudit au moins un signal de commande MLI se situe dans une plage de 1-10 kHz.

9. Filtre électrique actif pour supprimer un ou plusieurs courants harmoniques générés par une ou plusieurs charges connectées fonctionnellement à un réseau d'alimentation électrique, lequel filtre électrique actif comprend :
- un onduleur électronique comprenant un certain nombre de commutateurs commandés, lequel onduleur électronique est connecté fonctionnellement à un filtre LCL ; et
- un moyen pour générer des signaux de commande MLI vers chacun des commutateurs commandés en réponse à un courant harmonique particulier ou des courants harmoniques particuliers à supprimer dans le réseau d'alimentation électrique ;
caractérisé en ce qui :
le moyen pour générer des signaux de commande MLI est conçu pour faire varier de manière continue la fréquence de modulation d'au moins un signal de commande MLI en réponse à une valeur d'au moins un paramètre électrique mesuré.

10. Filtre électrique actif selon la revendication 9, dans lequel le moyen pour générer les signaux de commande MLI est capable de faire varier la fréquence de modulation dudit au moins signal de commande MLI dans une trame de temps correspondant à une fréquence fondamentale du réseau d'alimentation électrique.

11. Filtre électrique actif selon les revendications 9 ou 10, dans lequel le filtre LCL et l'onduleur électronique sont conçus pour supprimer des courants harmoniques dans un réseau d'alimentation électrique triphasé.

12. Filtre électrique actif selon l'une quelconque des revendications 9 à 11, comprenant en outre un moyen (2) pour mesurer un courant de sortie du filtre électrique actif, des moyens (3, 4, 5, 6, 8) pour mesurer ledit au moins un paramètre électrique, et un moyen pour mesurer un courant de réseau d'alimentation électrique.

13. Filtre électrique actif selon la revendication 12, dans lequel les moyens pour mesurer ledit au moins un paramètre électrique comprennent un capteur de courant (3, 4, 5, 6, 8) disposé de manière à mesurer un courant circulant dans un condensateur du filtre LCL.

14. Filtre électrique actif selon l'une quelconque des revendications 9 à 13, dans lequel la fréquence de modulation dudit au moins un signal de commande MLI se situe dans une plage de 1-10 kHz.

15. Réseau d'alimentation électrique dans lequel un ou plusieurs filtres électriques actifs selon l'une quelconque des revendications 9 à 14 sont connectés en parallèle à une ou plusieurs charges générant un ou plusieurs courants harmoniques.
